# EUROPEAN PATENT SPECIFICATION

(11) **EP 3 489 155 B1**
(45) Date of publication and mention of the grant of the patent: **28.04.2021**
(21) Application number: 17830199.0
(22) Date of filing: 17.02.2017
(51) Int. Cl.: B65B 13/22, B25B 25/00, B60P 7/08, B21F 9/00

(54) **TIE-DOWN**
VERZURRUNG
ATTACHE

(30) Priority: 19.07.2016 CN 201610570350
(43) Date of publication of application: 29.05.2019
(73) Proprietor: ZheJiang TOPSUN Logistic Control Co., Ltd., Taizhou, Zhejiang 317600 (CN)
(72) Inventor: ZHU, Zhengzhong, Taizhou City Zhejiang 317600 (CN)
(74) Representative: Elzaburu S.L.P.
(86) International application number: PCT/CN2017/073857
(87) International publication number: WO 2018/014550

(56) References cited:
- EP-A1- 2 353 934
- WO-A1-2004/081409
- WO-A1-2010/076615
- CN-A- 106 184 864
- CN-U- 201 506 291
- CN-U- 203 345 219
- CN-U- 203 612 247
- JP-A- H10 248 613
- US-A1- 2011 041 301
- US-A1- 2015 210 203
- US-B1- 7 281 701

## Description

### Background of the invention

### Field of Invention

The present invention belongs to the technical field of strapping in transportation and relates to a ratchet tie down device.

### Related Art

Tie down device such as ratchet tie down is a hand-driven tensioning device that achieves strapping and tightening by winding and retracting one end of a strap.

The tie down device is a relatively mature tool, for example, a structurally improved hand puller disclosed in the Chinese patent with authorized publication number CN 202368808 U includes a handle, a reel, ratchets, and a control pull plate. Two ends of the reel pass through two side plates of the handle. The two ratchets are sleeved on left and right sides of the reel. The control pull plate is located between the two side plates of the handle, a middle portion of the control pull plate has an opening, a rear end of the opening is provided with a first pulling plate, a front end of the control pull plate has a recess, and an inner side of the recess is provided with a second pulling plate. The reel is used for winding a strap, when the strap is tightened, the ratchets are rotated by rotating the handle, the ratchets rotate to drive the reel to rotate, and the reel rotates so that the strap wound on the reel winds up to tighten the strap.

At present, the reel usually consists of two semicylindrical shafts, a gap is provided between the two semicylindrical shafts, opposite sides of the two semicylindrical shafts are planes, away-facing circumferential surfaces of the two semicylindrical shafts are smooth curved surfaces, and the curved surface and the plane on the semicylindrical shaft are transitioned through transitional curved surfaces. When the strap is wound on the reel, its end first passes through the gap between the two semicylindrical shafts, the end of the strap abuts against the curved surface of one of the semicylindrical shafts, and then the strap is wound around the two semicylindrical shafts repeatedly with multiple turns. The strap at an innermost turn presses the end of the strap tightly against the curved surface, and the strap at outer turns apply a pressing force to the strap at the innermost turn, so the strap at the innermost turn is subjected to a larger pressing force and will be tightly pressed against the curved surface. When a tie down device winds up the strap to tighten the strap, since the strap is being tightened, the strap wound on the two semicylindrical shafts will have a slight circumferential rotation relative to the two semicylindrical shafts when ratchets rotate one tooth, and the strap wound on the two semicylindrical shafts is returned to its original position after the strap is released. Since the curved surfaces on the semicylindrical shafts are smooth, circumferential positioning between the strap at the innermost turn and the curved surfaces is only achieved by friction, and the friction is small. Therefore, the strap at the innermost turn will have a slight circumferential rotation relative to the semicylindrical shafts when tightening the strap, and will be returned to its original position after the strap is released. During this process, there will be friction between the strap and the semicylindrical shafts, which will cause the strap to wear. After using for a long time, the strap will break, and the sections that are the most easy to wear down are the sections that abut against the curved surfaces of the semicylindrical shafts. For example, American patent US 7281701 B1 adopts a fastener including a frame, a handle and a reel, the reel consists of two semicylindrical shafts, and away-facing circumferential surfaces of the two semicylindrical shafts are smooth curved surfaces. Therefore, the strap is easy to break by the friction between the strap and the semicylindrical shafts.

Another European patent document EP 2353934A1 provides a ratchet tensioner. It has a console with a winding shaft, and an adapter connected to a swivel axis aligned parallel to the winding shaft. The swivel axis is pivoted to the console, and carries multiple bolt elements. Each of the bolt elements have a rough, corded surface structure to increase the friction between the strap and the bolt element. However, the strap installation of the ratchet tensioner is different from that of the tie down device, and the strap is also easy to break by the increased frictior EP 2 353 934 A1 discloses the preamble of claim 1.

### Summary of the invention

One object of one embodiment of the present invention is to solve the technical problems in the prior art by providing a tie down device with which a strap and a reel are always kept to rotate synchronously.

One object of one embodiment of the present invention can be achieved by the following technical solutions:
One embodiment of a tie down device comprises a bracket, a handle, and a reel, the bracket and the handle are pivotally connected through the reel, the reel is fixed with ratchets, the handle is disposed with a push plate capable of interlocking with the ratchets and driving the ratchets to rotate forward, and the bracket is disposed with a stop plate capable of preventing the ratchets from rotating reversely. The reel comprises two semicylindrical shafts, a gap is disposed between the two semicylindrical shafts capable of allowing a strap to pass through, away-facing circumferential surfaces of the two semicylindrical shafts are arcuate abutments, each of the abutments has a plurality of protrusions, wherein each of the protrusions comprises a plurality of elongated ridges, a longitudinal direction of the ridge is parallel to a longitudinal direction of the semicylindrical shaft, a groove is formed between the adjacent ridges, and between the protrusions is an embedding sag into which the strap is embedded after deformation, such that the groove is the embedding sag.

One embodiment of an axle is fixed at one end of the bracket away from the reel, and when the tie down device is used, a long strap and a short strap are required to achieve strapping, wherein one end of the short strap is fixed to the axle, and another end of the short strap is fixed with a hook, one end of the long strap is connected with the reel, and another end of the long strap is fixed with a hook. When a goods is strapped, the hook of the long strap and the hook of the short strap are hooked, and then the ratchets rotate and drive the reel to rotate by pulling the handle, the rotating reel will tighten the long strap, thus allowing the long strap and the short strap to strap the goods.

When one embodiment of the strap is connected with the reel, the end of the strap passes through the gap between the two semicylindrical shafts and then abuts against the abutment of one of the semicylindrical shafts, and the strap is wound around the two semicylindrical shafts repeatedly with multiple turns. At this time, the strap is in a tightened state, and the strap of inner turns is pressed tightly by the strap of outer turns to prevent the strap from disengaging from the two semicylindrical shafts, and the strap at an innermost turn abutted against the abutments of the two semicylindrical shafts is abutted against the protrusions. Since the strap at the innermost turn is subjected to a largest pressure from the strap of the outer turns, and between the protrusions are disposed with the embedding sags, the strap at the innermost turn will be deformed and embedded in the embedding sags to form deformed segments, and the deformed segments will abut against the protrusions when the two semicylindrical shafts rotate, thereby avoiding the displacement of the strap at the innermost turn relative to the two semicylindrical shafts when the two semicylindrical shafts rotate, so the strap and the two semicylindrical shafts are always kept to rotate synchronously. Therefore, friction between the strap at the innermost turn and the semicylindrical shafts is avoided, which helps prevent the strap from wearing and breaking, thereby improving the service life of the strap.

With the strap, which is embedded in the embedding sags, abutting against the protrusions, the strap is circumferentially positioned relative to the semicylindrical shafts. Comparing with friction, the protrusions provide greater resistance, which makes it easier to position the strap circumferentially on the semicylindrical shafts. Embedding the strap in the embedding sags is realized by the pressing force formed by the winding of the strap, there is no need to add other corresponding structures, so the structure is simple.

One embodiment of the additional protrusions can enhance the strength of the semicylindrical shafts, so that the strength against bending of the semicylindrical shafts in a radial direction is greater, and can be prevented from being bent and deformed by the tightening force of the strap when the strap is being tightened. Since the semicylindrical shafts will not be bent, that is, the abutments of the semicylindrical shafts do not bend or arch during use, thereby reducing the risk of scratching the strap due to bending and deformation of the semicylindrical shafts, further preventing the strap from breakage caused by being worn down, and thus the service life of the strap is increased.

The deformed segments of the strap at the innermost turn are embedded in the embedding sags between the adjacent ridges, and two ends of the deformed segment are abutted against the adjacent ridges. When the two semicylindrical shafts rotate, the deformed segments abut against the ridges on a side facing the direction against the rotation direction of the semicylindrical shafts, and the deformed segments are positioned in the grooves, so that the strap and the two semicylindrical shafts are always kept to rotate synchronously. Thereby avoiding the displacement of the strap at the innermost turn relative to the two semicylindrical shafts, and preventing the strap from breakage caused by being worn down by the semicylindrical shafts, and thus improving the service life of the strap.

In one embodiment of the above-mentioned strapping device, a side surface of each of the ridges is an arcuate surface. The strap at the innermost turn abuts against the side surfaces of the ridges, the arcuate side surfaces of the ridges allow the strap to be evenly pressured, a section of the strap, which is abutted against the side surface, and a deformed section of the strap, which is embedded in embedding sag, have a smooth transition there between to avoid damaging the strap.

In one embodiment of the above-mentioned strapping device, radians of spacings between the adjacent ridges are the same, and an arc length of each of the abutments between the adjacent ridges is 1 to 2.5 times of a diameter of each of the ridges. The same radians of spacings between the adjacent ridges make the lengths of the deformed segments of the strap the same, and each of the deformed segments of the strap at the innermost turn provides a same resistance when the semicylindrical shafts rotate. At the same time, when the ratios between the arc length of the abutment between the adjacent ridges and the diameter of the ridge are less than the above relationship value, the strap at the innermost turn cannot be deformed and embedded in the embedding sags due to insufficient spaces of the embedding sags. When the ratios between the arc length of the abutment between the adjacent ridges and the diameter of the ridge are greater than the above relationship value, because the deformed segments of the strap at the innermost turn embedded in the embedding sags are too long, the deformed segments have weak support force, and when the semicylindrical shafts rotate, a middle section of the deformed segment will be displaced relative to the semicylindrical shafts, resulting in displacement of the strap at the innermost turn relative to the semicylindrical shafts. The relationship value between the diameter of the ridge and the arc length of the abutment between the adjacent ridges allows the strap at the innermost turn to be capable of deforming and embedding into the embedding sags; at the same time, the deformed segment embedded in the embedding sag has a moderate length, the deformed segment itself has a larger support force, and the shape can be kept unchanged when the semicylindrical shafts rotate, so that the strap and the two semicylindrical shafts are always kept to rotate synchronously, thereby preventing the strap from breakage caused by being worn down.

In one embodiment of the above-mentioned strapping device, the bracket has a first pivot hole, the handle has a second pivot hole, the two semicylindrical shafts pass through the first pivot hole and the second pivot hole, and the side surface of each of the ridges on the semicylindrical shaft is capable of abutting against a hole wall of the first pivot hole and a hole wall of the second pivot hole. Since a contact area of the side surface of the ridge abutting against the hole wall of the first pivot hole and the hole wall of the second pivot hole is small, surfaces of the two semicylindrical shafts in contact with the bracket and the handle are small, and the friction is small, so the two semicylindrical shafts are subject to smaller resistance when rotating relative to the bracket and the handle, making it easier for the two semicylindrical shafts to rotate relative to the bracket, and thus tightening of the strap is less laborious.

As a second unclaimed case, in one embodiment of the above-mentioned strapping device, each of the protrusions comprises a plurality of first slant ribs and a plurality of second slant ribs, the first slant ribs and the second slant ribs crisscross each other to form a mesh structure, a basin is formed between the adjacent first slant ribs and the adjacent second slant ribs, and the basin is the embedding sag. The strap at the innermost turn is embedded in the basins under the pressure of the outer turns, the strap embedded in the basin has a shape matching the basin, and each side of the strap embedded in the basin is abutted against the corresponding first slant ribs and second slant ribs. When the two semicylindrical shafts rotate, the strap embedded in the basins is abutted against the first slant ribs and the second slant ribs on a side facing the direction against the rotation direction of the semicylindrical shafts. The strap embedded in the basins is positioned in the basins, so the strap and the two semicylindrical shafts are always kept to rotate synchronously, thereby avoiding the displacement of the strap at the innermost turn relative to the two semicylindrical shafts, and preventing the strap from breakage caused by being worn down by the semicylindrical shafts, and thus improving the service life of the strap.

In one embodiment of the above-mentioned strapping device, a side surface of the first slant rib and a side surface of the second slant rib are arcuate surfaces. The strap at the innermost turn abuts against the side surfaces of the first slant ribs and the second slant ribs, the arcuate side surfaces of the first slant ribs and the second slant ribs allow the strap to be evenly pressured, and sections of the strap, which are abutted against the first slant ribs and the second slant ribs, and the deformed sections of the strap, which are embedded in the basins, have smooth transition there between to avoid damaging the strap.

In one embodiment of the above-mentioned strapping device, spacings between the adjacent first slant ribs are the same, spacings between the adjacent second slant ribs are the same, and the spacings between the adjacent first slant ribs are the same as the spacings between the adjacent second slant ribs. Lengths of sides of the basin formed by the structure are the same, so that the strap embedded in the basins is subjected to a same reaction force when abutting against the first slant ribs and the second slant ribs. When the two semicylindrical shafts rotate, the strap embedded in the basins is prevented from displacement caused by further deformation due to subjecting to different reaction forces, so that the strap can be positioned circumferentially relative to the two semicylindrical shafts to ensure the service life of the strap.

As a third unclaimed case, in one embodiment of the above-mentioned strapping device, each of the protrusions comprises a plurality of hemispherical nodules, the nodules are equally spaced and distributed along a longitudinal direction of the abutments, the nodules are equally spaced and distributed along an arcuate widthwise direction of the abutments, and the embedding sag is formed between the adjacent nodules. The strap at the innermost turn is embedded in the embedding sags between the nodules under the pressure of the outer turns, the strap embedded in the embedding sag has a shape matching the embedding sag, and the strap embedded in the embedding sags is abutted against the corresponding nodules. When the two semicylindrical shafts rotate, the strap embedded in the embedding sags is abutted against the nodules on a side facing the direction against the rotation direction of the semicylindrical shafts. The strap embedded in the embedding sags is positioned in the embedding sags, so the strap and the two semicylindrical shafts are always kept to rotate synchronously, thereby avoiding the displacement of the strap at the innermost turn relative to the two semicylindrical shafts, and preventing the strap from breakage caused by being worn down by the semicylindrical shafts, and thus improving the service life of the strap.

In one embodiment of the above-mentioned strapping device, the nodule is hemispherical. The nodules with this structural shape enable the strap to be covered thereon, and local stress concentration is prevented from causing the strap to be pierced, thereby avoiding damage to the strap.

Compared with the prior art, one embodiment of the tie down device keeps the strap and the two semicylindrical shafts to rotate always synchronously, friction between the strap at the innermost turn and the semicylindrical shafts, which will cause the strap to wear and break, is avoided, and, thereby, the service life of the strap is improved.

### Brief description of the drawings

FIG. 1 is a perspective view of one embodiment of a tie down device of the present invention;
FIG. 2 is a cross-sectional view of one embodiment of a strap wound on two semicylindrical shafts;
FIG. 3 is an enlarged view of portion A of FIG. 2;
FIG. 4 is a perspective view of the semicylindrical shaft according to a first embodiment of the present invention;
FIG. 5 is an enlarged view of the connection between the semicylindrical shafts and a bracket according to the first embodiment of the present invention;
FIG. 6 is an enlarged view of the connection between the semicylindrical shafts and a handle according to the first embodiment of the present invention;
FIG. 7 is a perspective view of the semicylindrical shaft according to a second embodiment of the present invention; and
FIG. 8 is a perspective view of the semicylindrical shaft according to a third embodiment of the present invention.

### Detailed description of the invention

The technical solutions of the present invention are further described below with reference to the specific embodiments of the present invention in conjunction with the accompanied drawings, but the present invention is not limited to the embodiments.

### Embodiment 1

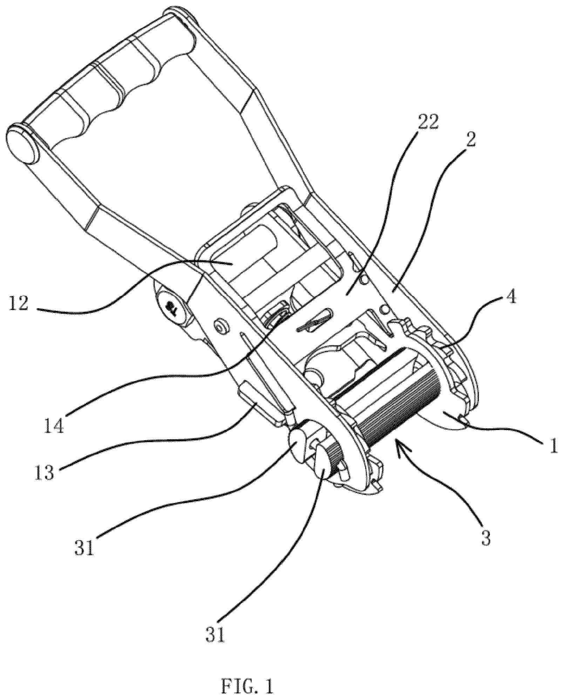

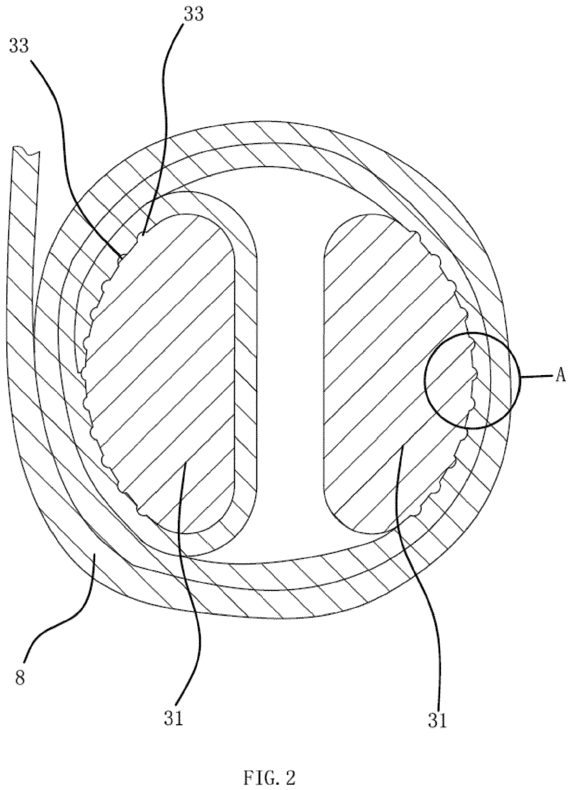

As shown in FIGS. 1 and 2, one embodiment of a tie down device comprises a bracket 1, a handle 2 and a reel 3, the reel 3 comprises two semicylindrical shafts 31, and a gap 32 is disposed between the two semicylindrical shafts 31 capable of allowing a strap 8 to pass through. One end of the bracket 1 and one end of the handle 2 are pivotally connected through the reel 3. The bracket 1 is provided with a first pivot hole 11, the handle 2 is provided with a second pivot hole 21, and the two semicylindrical shafts 31 pass through the first pivot hole 11 and the second pivot hole 21. An axle 12 is fixed at one end of the bracket 1 away from the reel 3, the reel 3 is fixed with ratchets 4, the ratchets 4 are located between the bracket 1 and the handle 2, middle portions of the ratchets 4 have two half-moon holes, and the two semicylindrical shafts 31 respectively pass through the holes. The handle 2 is disposed with a push plate 22 capable of interlocking with the ratchets 4 and driving the ratchets 4 to rotate forward, and the push plate 22 can slide relative to the handle 2 to realize disengaging or engaging with the ratchets 4. The bracket 1 is disposed with a stop plate 13 capable of preventing the ratchets 4 from rotating reversely, and a spring 14 is disposed between and the stop plate 13 and the bracket 1. When the ratchets 4 rotate, the ratchets 4 are capable of pushing the stop plate 13 to compress the spring 14, and after the ratchets 4 are rotated into positions, the stop plate 13 is re-interlocked into the ratchets 4 by the action of the spring 14.

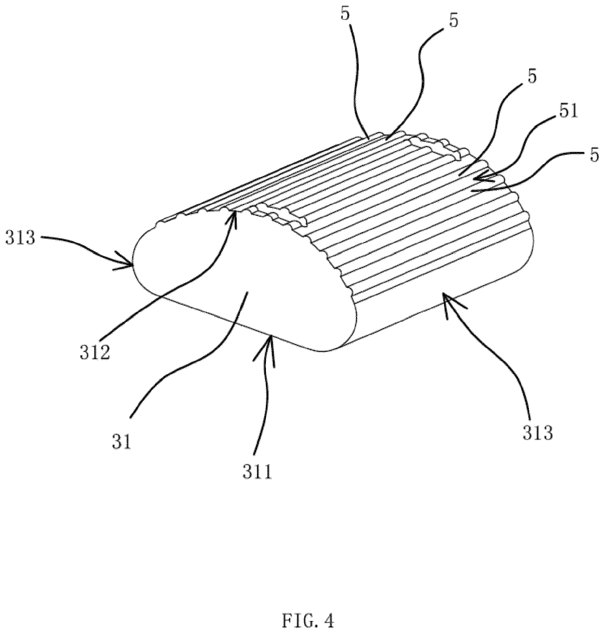

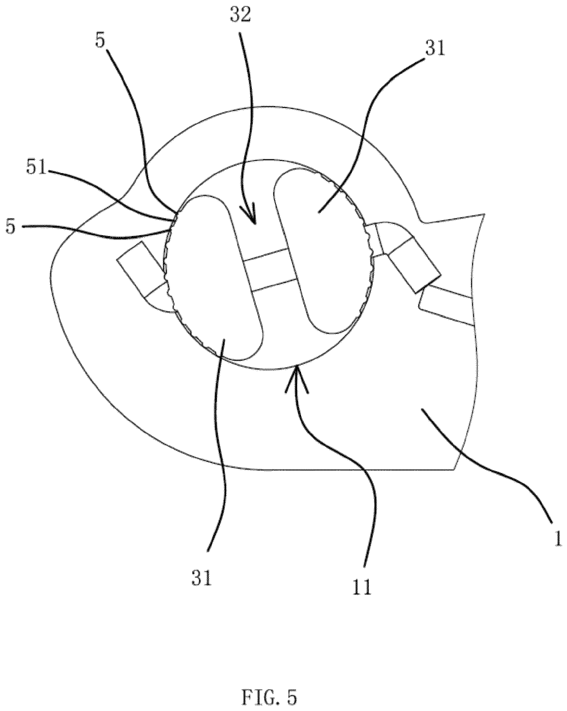

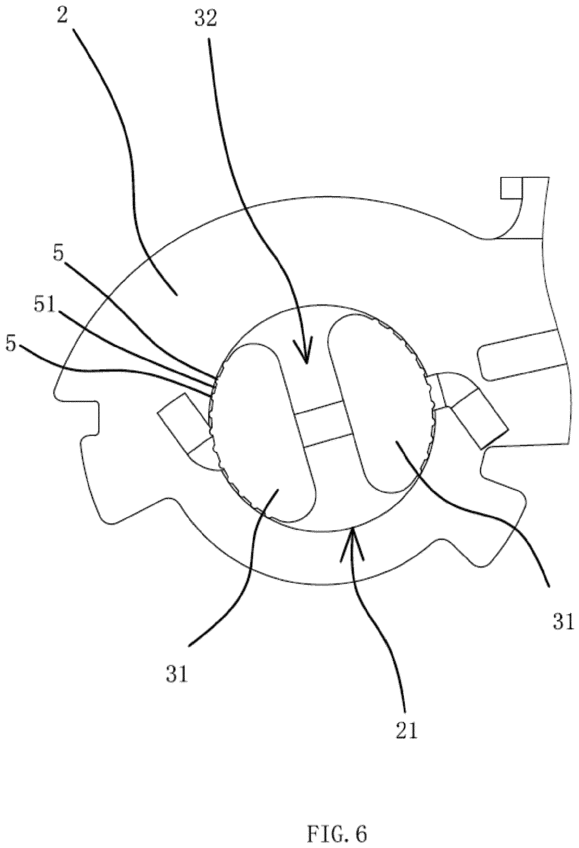

As shown in FIG. 2 to FIG. 6, opposite sides of one embodiment of the two semicylindrical shafts 31 are planes 311, away-facing circumferential surfaces of the two semicylindrical shafts 31 are arcuate abutments 312, the plane 311 and the abutment 312 are connected by a transitional curved surface 313, each of the abutments 312 has a plurality of protrusions 33, and between the protrusions 33 is an embedding sag 331 into which the strap 8 is embedded after deformation. Specifically, each of the protrusions 33 comprises a plurality of elongated ridges 5, a side surface of each of the ridges 5 is an arcuate surface, a longitudinal direction of the ridge 5 is parallel to a longitudinal direction of the semicylindrical shaft 31, and the side surface of each of the ridges 5 on the semicylindrical shaft 31 is capable of abutting against a hole wall of the first pivot hole 11 and a hole wall of the second pivot hole 21. Radians of spacings between the adjacent ridges 5 are the same, and an arc length of each of the abutments 312 between the adjacent ridges 5 is 1 to 2.5 times of a diameter of each of the ridges 5. In this embodiment, the arc length of each of the abutments 312 between the adjacent ridges 5 is 1, 1.5 or 2.5 times of the diameter of each of the ridges 5, a groove 51 is formed between the adjacent ridges 5, and the groove 51 is the embedding sag 331.

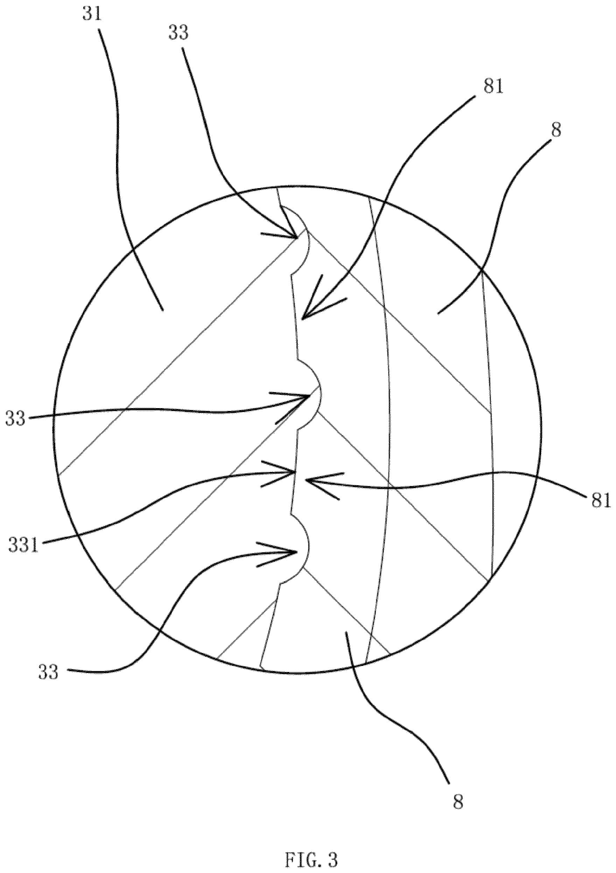

As shown in FIG. 2 and FIG. 3, when one embodiment of the strap 8 is connected with the reel 3, the end of the strap 8 passes through the gap 32 between the two semicylindrical shafts 31 and then abuts against the abutment 312 of one of the semicylindrical shafts 31, and the strap 8 is wound around the two semicylindrical shafts 31 repeatedly with multiple turns. At this time, the strap 8 is in a tightened state, and the strap 8 of inner turns is pressed tightly by the strap 8 of outer turns to prevent the strap 8 from disengaging from the two semicylindrical shafts 31, and the strap 8 at an innermost turn abutted against the abutments 312 of the two semicylindrical shafts 31 is abutted against the protrusions 33. Since the strap 8 at the innermost turn is subjected to a largest pressure from the strap 8 of the outer turns, and between the protrusions 33 are disposed with the embedding sags 331, the strap 8 at the innermost turn will be deformed and embedded in the embedding sags 331 to form deformed segments 81, and the deformed segments 81 will abut against the protrusions 33 when the two semicylindrical shafts 31 rotate, thereby avoiding the displacement of the strap 8 at the innermost turn relative to the two semicylindrical shafts 31 when the two semicylindrical shafts 31 rotate. Therefore, friction between the strap 8 at the innermost turn and the semicylindrical shafts 31, which will cause the strap 8 to wear and break, is avoided, and, thereby, the service life of the strap 8 is improved.

### Embodiment 2

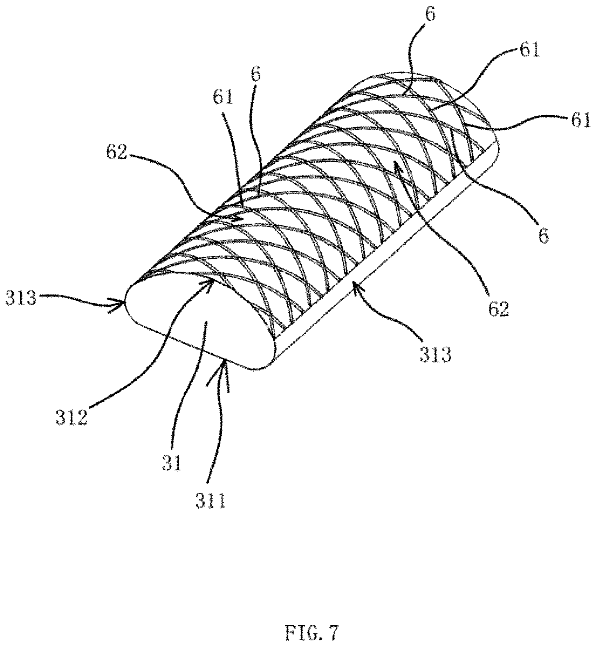

The structures and the principles of this embodiment are basically the same as those of embodiment 1. The differences are that, as shown in FIG. 7, each of the protrusions 33 comprises a plurality of first slant ribs 6 and a plurality of second slant ribs 61, a side surface of the first slant rib 6 and a side surface of the second slant rib 61 are arcuate surfaces, spacings between the adjacent first slant ribs 6 are the same, spacings between the adjacent second slant ribs 61 are the same, and the spacings between the adjacent first slant ribs 6 are the same as the spacings between the adjacent second slant ribs 61. The first slant ribs 6 and the second slant ribs 61 crisscross each other to form a mesh structure, a basin 62 is formed between the adjacent first slant ribs 6 and the adjacent second slant ribs 61, and the basin 62 is the embedding sag 331. The strap 8 at the innermost turn is embedded in the basins 62 under the pressure of the outer turns, the strap 8 embedded in the basin 62 has a shape matching the basin 62, and each side of the strap 8 embedded in the basin 62 is abutted against the corresponding first slant ribs 6 and second slant ribs 61. When the two semicylindrical shafts 31 rotate, the strap 8 embedded in the basins 62 is abutted against the first slant ribs 6 and the second slant ribs 61 on a side facing the direction against the rotation direction of the semicylindrical shafts 31. The strap 8 embedded in the basins 62 is positioned in the basins 62, thereby avoiding the displacement of the strap 8 at the innermost turn relative to the two semicylindrical shafts 31, and preventing the strap 8 from breakage caused by being worn down by the semicylindrical shafts 31, and thus improving the service life of the strap 8.

### Embodiment 3

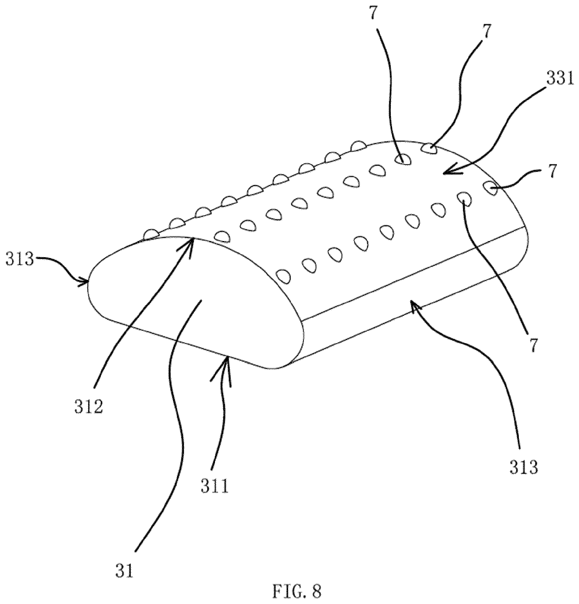

The structures and the principles of this embodiment are basically the same as those of embodiment 1. The differences are that, as shown in FIG. 8, each of the protrusions 33 comprises a plurality of hemispherical nodules 7, the nodules 7 are equally spaced and distributed along a longitudinal direction of the abutments 312, the nodules 7 are equally spaced and distributed along an arcuate widthwise direction of the abutments 312, and the embedding sag 331 is formed between the adjacent nodules 7. The strap 8 at the innermost turn is embedded in the embedding sags 331 between the nodules 7 under the pressure of the outer turns, the strap 8 embedded in the embedding sag 331 has a shape matching the embedding sag 331, and the strap 8 embedded in the embedding sags 331 is abutted against the corresponding nodules 7. When the two semicylindrical shafts 31 rotate, the strap 8 embedded in the embedding sags 331 is abutted against the nodules 7 on a side facing the direction against the rotation direction of the semicylindrical shafts 31. The strap 8 embedded in the embedding sags 331 is positioned in the embedding sags 331, thereby avoiding the displacement of the strap 8 at the innermost turn relative to the two semicylindrical shafts 31, and preventing the strap 8 from breakage caused by being worn down by the semicylindrical shafts 31, and thus improving the service life of the strap 8.

### LIST OF REFERENCED PARTS

1 bracket
11 first pivot hole
12 axle
13 stop plate
14 spring
2 handle
21 second pivot hole
22 push plate
3 reel
31 semicylindrical shaft
311 plane
312 abutment
313 transitional curved surface
32 gap
33 protrusion
331 embedding sag
4 ratchet
5 ridge
51 groove
6 first slant rib
61 second slant rib
62 basin
7 nodule
8 strap
81 deformed segment

## Claims

1. A tie down device comprising a bracket (1), a handle (2), and a reel (3), the bracket (1) and the handle (2) being pivotally connected through the reel (3), the reel (3) being fixed with ratchets (4), the handle (2) being disposed with a push plate (22) capable of interlocking with the ratchets (4) and driving the ratchets (4) to rotate forward, the bracket (1) is disposed with a stop plate (13) capable of preventing the ratchets (4) from rotating reversely, the reel (3) comprising two semicylindrical shafts (31), a gap (32) is disposed between the two semicylindrical shafts (31) capable of allowing a strap (8) to pass through, away-facing circumferential surfaces of the two semicylindrical shafts (31) are arcuate abutments (312), each of the abutments (312) having a plurality of protrusions (33), **characterized in that** each of the protrusions (33) comprises a plurality of elongated ridges (5), a longitudinal direction of the ridge (5) is parallel to a longitudinal direction of the semicylindrical shaft (31), a groove (51) is formed between the adjacent ridges (5), and between the protrusions (33) is an embedding sag (331) into which the strap (8) is embedded after deformation, such that the groove (51) is the embedding sag (331).

2. The tie down device as claimed in claim 1, wherein a side surface of each of the ridges (5) is an arcuate surface.

3. The tie down device as claimed in claim 1, wherein radians of spacings between the adjacent ridges (5) are the same, and an arc length of each of the abutments (312) between the adjacent ridges (5) is 1 to 2.5 times of a diameter of each of the ridges (5).

4. The tie down device as claimed in any one of claims 1 or 2 or 3, wherein the bracket (1) has a first pivot hole (11), the handle (2) has a second pivot hole (21), the two semicylindrical shafts (31) pass through the first pivot hole (11) and the second pivot hole (21), and the side surface of each of the ridges (5) on the semicylindrical shaft (31) is capable of abutting against a hole wall of the first pivot hole (11) and a hole wall of the second pivot hole (21).

## Patentansprüche

1. Verzurrvorrichtung umfassend einen Bügel (1), einen Griff (2) und eine Rolle (3), wobei der Bügel (1) und der Griff (2) schwenkbar durch die Rolle (3) verbunden sind, die Rolle (3) mit Ratschen (4) befestigt ist, der Griff (2) mit einer Druckplatte (22) angeordnet ist, die in der Lage ist, mit den Ratschen (4) zu verriegeln und die Ratschen (4) anzutreiben, um sich vorwärts zu drehen, der Bügel (1) ist mit einer Anschlagplatte (13) angeordnet, die in der Lage ist, die Ratschen (4) daran zu hindern, sich rückwärts zu drehen, die Rolle (3) umfassend zwei halbzylindrische Wellen (31), ein Spalt (32) ist zwischen den beiden halbzylindrischen Wellen (31) angeordnet, der in der Lage ist, ein Band (8) hindurchgehen zu lassen, abgewandte Umfangsflächen der beiden halbzylindrischen Wellen (31) sind bogenförmige Widerlager (312), wobei jedes der Widerlager (312) eine Vielzahl von Vorsprüngen (33) aufweist, **dadurch gekennzeichnet, dass** jeder der Vorsprünge (33) eine Vielzahl von länglichen Erhöhungen (5) umfasst, eine Längsrichtung der Erhöhung (5) parallel zu einer Längsrichtung der halbzylindrischen Welle (31) ist, eine Nut (51) zwischen den benachbarten Erhöhungen (5) gebildet ist, und zwischen den Vorsprüngen (33) ein Einbettungsdurchhang (331) ist, in den das Band (8) nach der Verformung eingebettet wird, so dass die Nut (51) der Einbettungsdurchhang (331) ist.

2. Verzurrvorrichtung nach Anspruch 1, wobei eine Seitenfläche jeder der Erhöhungen (5) eine bogenförmige Fläche ist.

3. Verzurrvorrichtung nach Anspruch 1, wobei die Radianten der Abstände zwischen den benachbarten Erhöhungen (5) gleich sind und eine Bogenlänge jedes der Widerlager (312) zwischen den benachbarten Erhöhungen (5) das 1 bis 2,5-fache eines Durchmessers jeder der Erhöhungen (5) beträgt.

4. Verzurrvorrichtung nach einem der Ansprüche 1 oder 2 oder 3, wobei der Bügel (1) ein erstes Schwenkloch (11) aufweist, der Griff (2) ein zweites Schwenkloch (21) aufweist, die beiden halbzylindrischen Wellen (31) durch das erste Schwenkloch (11) und das zweite Schwenkloch (21) verlaufen und die Seitenfläche jeder der Erhöhungen (5) auf der halbzylindrischen Welle (31) in der Lage ist, gegen eine Lochwand des ersten Schwenklochs (11) und eine Lochwand des zweiten Schwenklochs (21) anzuliegen.

## Revendications

1. Dispositif d'arrimage comprenant un support (1), une poignée (2) et un enrouleur (3), le support (1) et la poignée (2) étant reliés de manière pivotante par l'intermédiaire de l'enrouleur (3), l'enrouleur (3) étant fixé par des rochets (4), la poignée (2) étant disposée avec une plaque de poussée (22) capable de s'enclencher avec les rochets (4) et d'entraîner les rochets (4) en rotation vers l'avant, le support (1) est disposé avec une plaque d'arrêt (13) capable d'empêcher les cliquets (4) de tourner en sens inverse, l'enrouleur (3) comprenant deux arbres semi-cylindriques (31), un espace (32) est disposé entre les deux arbres semi-cylindriques (31) capable de permettre le passage d'une sangle (8), les surfaces circonférentielles éloignées des deux arbres semi-cylindriques (31) sont des butées arquées (312), chacune des butées (312) ayant une pluralité de saillies (33), **caractérisé en ce que** chacune des saillies (33) comprend une pluralité de arêtes allongées (5), une direction longitudinale de l'arête (5) est parallèle à une direction longitudinale de l'arbre semi-cylindrique (31), une rainure (51) est formée entre les arêtes adjacentes (5), et entre les saillies (33) se trouve une fente d'encastrement (331) dans laquelle la sangle (8) est encastrée après déformation, de sorte que la rainure (51) est la fente d'encastrement (331).

2. Dispositif d'arrimage selon la revendication 1, dans lequel une surface latérale de chacune des arêtes (5) est une surface arquée.

3. Dispositif d'arrimage selon la revendication 1, dans lequel les radians des espacements entre les arêtes adjacentes (5) sont les mêmes, et une longueur d'arc de chacune des butées (312) entre les arêtes adjacentes (5) est de 1 à 2,5 fois un diamètre de chacune des arêtes (5).

4. Dispositif d'arrimage selon l'une quelconque des revendications 1 ou 2 ou 3, dans lequel le support (1) comporte un premier trou de pivotement (11), la poignée (2) comporte un second trou de pivotement (21), les deux arbres semi-cylindriques (31) passent à travers le premier trou de pivotement (11) et le second trou de pivotement (21), et la surface latérale de chacune des arêtes (5) sur l'arbre semi-cylindrique (31) est capable de venir en butée contre une paroi de trou du premier trou de pivotement (11) et une paroi de trou du second trou de pivotement (21).
